# EUROPEAN PATENT SPECIFICATION

(11) **EP 3 855 603 B1**
(45) Date of publication and mention of the grant of the patent: **10.07.2024**
(21) Application number: 20153313.0
(22) Date of filing: 23.01.2020
(51) Int. Cl.: H02K 3/52

(54) **ELASTIC-LOCKING WINDING CARRIER FOR PREFORMED COIL ASSEMBLIES OF AN ELECTRIC MOTOR**
ELASTISCH VERRIEGELNDER WICKLUNGSTRÄGER FÜR VORGEFORMTE SPULENANORDNUNGEN EINES ELEKTROMOTORS
SUPPORT D'ENROULEMENT À VERROUILLAGE ÉLASTIQUE POUR ENSEMBLES BOBINES PRÉFORMÉES D'UN MOTEUR ÉLECTRIQUE

(43) Date of publication of application: 28.07.2021
(73) Proprietor: ETEL S.A., 2112 Môtiers (CH)
(72) Inventor: Garcia-Herreros, Ivan, 2123 St. Sulpice (CH); Pourchet, Johann, 25650 La Chaux (FR)
(74) Representative: P&TS SA (AG, Ltd.)

(56) References cited:
- WO-A2-2015/043844
- DE-A1- 102012 020 680
- JP-A- 2018 182 873
- JP-B2- 6 628 706
- US-A1- 2001 048 262

## Description

### Field of the invention

The present invention relates to an elastic-locking winding carrier for a preformed coil assembly and to a preformed coil assembly comprising elastic-locking winding carriers and configured to be elastically locked onto a tooth of a stator of an electric motor.

### Background of the invention

Coils are commonly inserted on the stator teeth using spacers, as disclosed for example in EP2717434, to ensure that they are centred vertically with respect to their corresponding tooth during the assembly process of the electric motor before a potting operation consisting in injecting synthetic resin so as to notably fix together all components of the stator, particularly the coils. The use of such spacers is however time consuming and costly.

Other solutions to centre the coils with the teeth of the stator already exist.

For example, US2007279178 discloses a winding body, for a preformed coil assembly, that includes a winding area formed by a winding support and two sidepieces connected to the winding support. A latching device is provided on the winding support. The latching device comprises a rectangular through-opening extending across the winding support and a flexible locking tab projecting from a lateral side of the rectangular through-opening and extending thereacross. The locking tab is free to pivot in the rectangular opening and is configured to engage in a corresponding recess in a stator tooth, where it is then locked in place. A preformed coil assembly comprising such winding body may therefore be locked in place on a tooth of a stator of an electrical machine, especially in the radial direction.

JP2018182873 discloses a stator of an electric motor having a tooth formed by laminating steel plates. The tooth is equipped with a bobbin having a substantially square cylinder around which a coil is wound. The uppermost of the steel plates constituting the tooth is provided with a leaf spring in contact with the bobbin.

The above described winding body has the drawback to safely lock the preformed coil assembly in the radial direction only if the gap between the upper side of a tooth of the stator and the lower portion of the winding support remains constant or does not vary significantly.

An aim of the present invention is therefore to provide an elastic-locking winding carrier configured to obviate or at least mitigate the above disadvantages.

In particular, an aim of the present invention is to provide an elastic-locking winding carrier for a preformed coil assembly that ensures an adequate locking of the preformed coil assembly both in the radial and axial direction of the stator irrespective of the magnitude of the gap, to a certain extent, between the upper and lower side of the tooth of the stator and the lower portion of a winding portion of the elastic-locking winding carrier when the preformed coil assembly is pushed radially on the tooth.

### Brief summary of the invention

This aim is achieved by an elastic-locking winding carrier for a preformed coil assembly of a stator of an electric motor as defined in independent claim 1. The winding carrier comprises a winding portion adapted to receive a winding comprising a wound electrical conductor to produce a coil. The winding portion comprises an upper and a lower portion, a first and a second opening arranged on the winding portion and a first and a second flexible member mounted inside respective first and second openings. The first and second flexible members are arranged such that either of said first and second flexible members cooperates with a tooth of the stator as a function of the magnitude of the gap between the tooth and the lower portion of the winding portion when the preformed coil assembly is mounted on the tooth in order to fix said preformed coil assembly to said tooth.

According to the invention a distal end of both the first and second flexible members extends below the lower portion of the winding portion into a tooth receiving portion. The distal end of one of the first and second flexible members extends further below the other of the first and second flexible members.

In an embodiment, one of said first and second flexible members is configured to break loose when the preformed coil assembly is mounted on said tooth.

In an embodiment, the first and second flexible members are each connected to a lateral side of respective first and second openings and extends thereacross.

In an embodiment, the tooth receiving portion is a right rectangular prism-shaped portion configured to be adjusted against an upper or lower portion of a tooth of the stator.

In an embodiment, the first and second flexible members are aligned within a plane equidistant from two opposite sides of the winding portion.

In an embodiment, the first and second openings are through-openings extending from the upper portion to the lower portion of the winding portion.

In an embodiment, the first and a second opening are spaced apart from each other to form a bridge therebetween to ensure structural rigidity to the winding carrier.

In an embodiment, the first and second openings have a constant square or rectangular cross-section along an axis perpendicular to a plane coinciding with the upper portion of the winding portion.

Another aspect of the invention relates to a preformed coil assembly comprising a preformed coil having an elongated opening and two winding carriers arranged on respective end of the elongated opening of the preformed coil. At least one of the two winding carriers is an elastic-locking winding carrier as described above.

In an embodiment, each of the two winding carriers is an elastic-locking winding carrier as described above.

Another aspect of the invention relates to a stator for a rotatory electric motor, comprising radial teeth and a preformed coil assembly, as described above, mounted on each tooth of the stator. The first and second flexible members of the first and second elastic-locking winding carriers of the preformed coil assembly lockingly cooperate with respective upper and lower side of a tooth of the stator.

Another aspect of the invention relates to a rotary electric motor comprising the stator as described above.

### Brief description of the drawings

The invention will be better understood with the aid of the description of several embodiments given by way of examples and illustrated by the figures, in which:
- Figure 1 shows a perspective top view of an elastic-locking winding carrier according to an embodiment;
- Figure 2 shows a perspective bottom view of the elastic-locking winding carrier of Figure 1;
- Figure 3 shows a top view of the elastic-locking winding carrier of Figure 1;
- Figure 4 shows a cross-sectional view of the elastic-locking winding carrier taken along the line A-A of Figure 3;
- Figure 5 is a perspective view of a preformed coil assembly according to an embodiment;
- Figure 6 is an elevation view of the preformed coil assembly of Figure 5.
- Figure 7 is a cross-sectional view of the preformed coil assembly taken along the line B-B of Figure 6, and
- Figure 8 is a partial perspective view of a stator of a rotary electric motor, whereby preformed coil assemblies are mounted on the rotor teeth.

### Detailed description of several embodiments of the invention

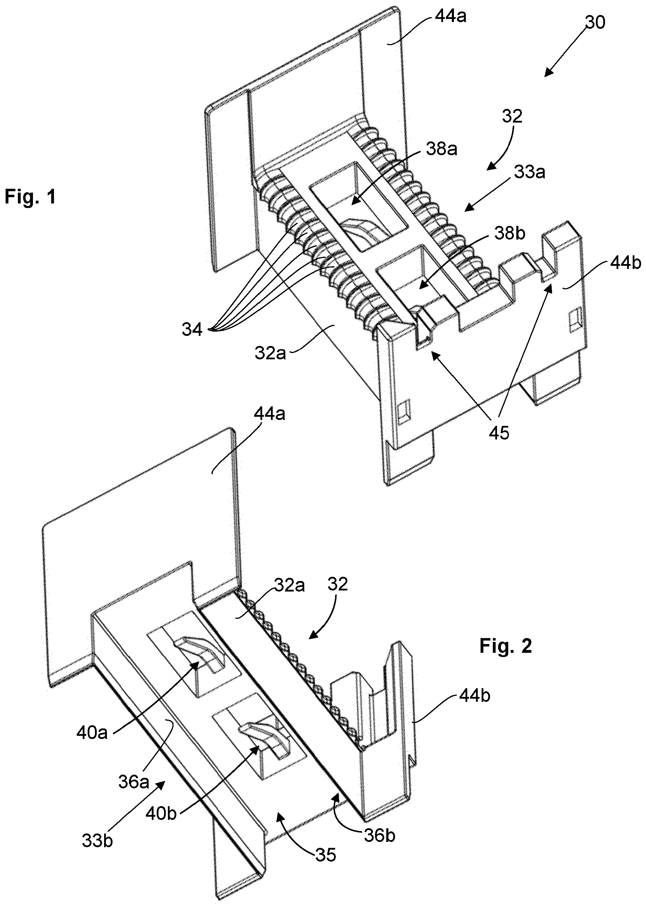

With reference to Figure 1, the elastic-locking winding carrier 30 comprises a winding portion 32 adapted to receive a winding comprising a wound electrical conductor to produce a coil, and a first and a second sidepiece 44a, 44b arranged on two opposite sides of the winding portion 32. One sidepiece 44b of the winding carrier 30 comprises two cut-out portions 45. One of these cut-out portions 45 is intended to receive the leading end of the electrical conductor while the other is intended to receive the trailing end of the electrical conductor for electrical interconnection of the coils in the stator.

The winding portion 32 comprises an upper portion 33a and a lower portion 33b (Figure 2) and a first and a second through-opening 38a, 38b extending from the upper portion 33a to the lower portion 33b of the winding portion 32. Bore openings may however be located on the lower portion of the winding portion according to an alternative embodiment. The first and second through-openings 38a, 38b may have for example a constant square or rectangular cross-section along an axis perpendicular to a plane coinciding with the upper portion 33a of the winding portion 32.

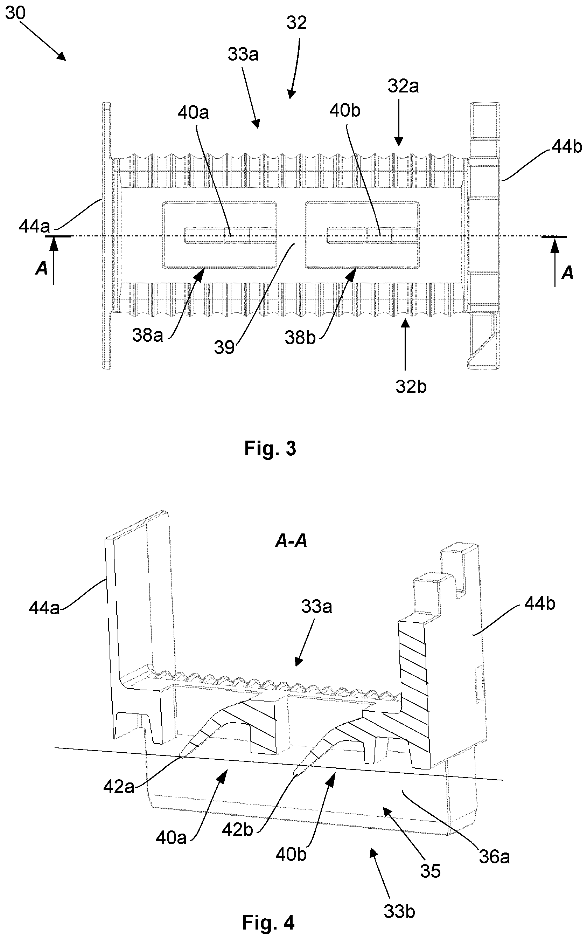

Referring to Figure 3, the first and a second opening 38a, 38b are spaced apart from each other to form a bridge 39 therebetween to ensure structural rigidity to the winding carrier 30, thus minimizing the risk of the winding carrier 30 collapsing during and after the winding process.

As particularly shown in figures 2 and 3, a first and a second flexible member 40a, 40b are arranged to project from a lateral side of respective first and second through-openings 38a, 38b and to extend thereacross. The first and second flexible members 40a, 40b comprise each an arcuate portion which extends downwardly.

With reference to Figure 3, the first and second flexible members 40a, 40b are aligned within a plane equidistant from two opposite sides 32a, 32b of the winding portion 32 and orthogonal to a plane coinciding with the upper portion 33a of the winding portion 32.

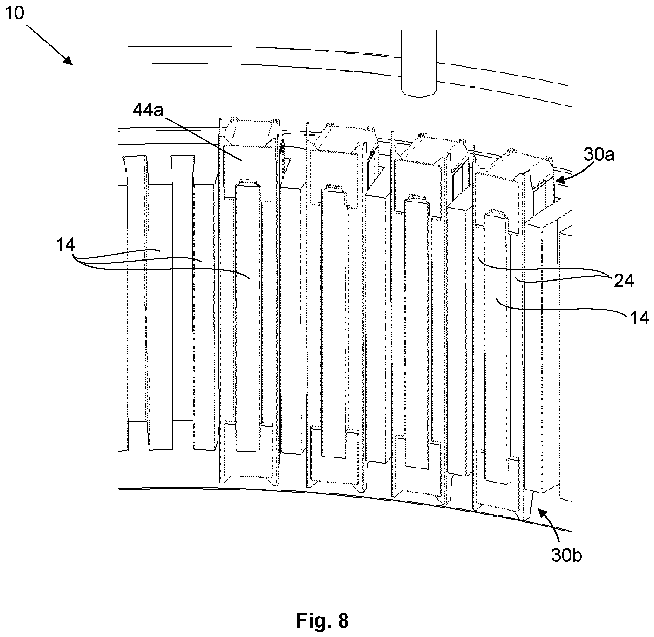

Referring to Figures 2 and 4, the distal ends 42a, 42b of both first and second flexible members 40a, 40b are located in a tooth receiving portion 35 adapted to be adjusted on an upper or lower portion of a tooth 14 of a stator 10 as shown in Figure 8. The tooth receiving portion 35 is in the form of a rectangular-shaped cavity comprising two opposite lateral walls 36a, 36b arranged to come in contact with the upper or lower lateral sides of a tooth of the stator.

As particularly shown in Figure 4, the distal end 42b of the flexible member 40b extends into the rectangular-shaped cavity 35 further below the distal end 42a of flexible member 40a for example by of few tenth of millimeters. The first and second flexible members 40a, 40b are therefore arranged such that either of said first and second flexible members 40a, 40b cooperates with a tooth 14 of the stator 10 as a function of the magnitude of the gap between an upper or a lower side of the tooth 14 and the lower portion 33b of the winding portion 32 when the elastic-locking winding carrier 30 is mounted on said tooth.

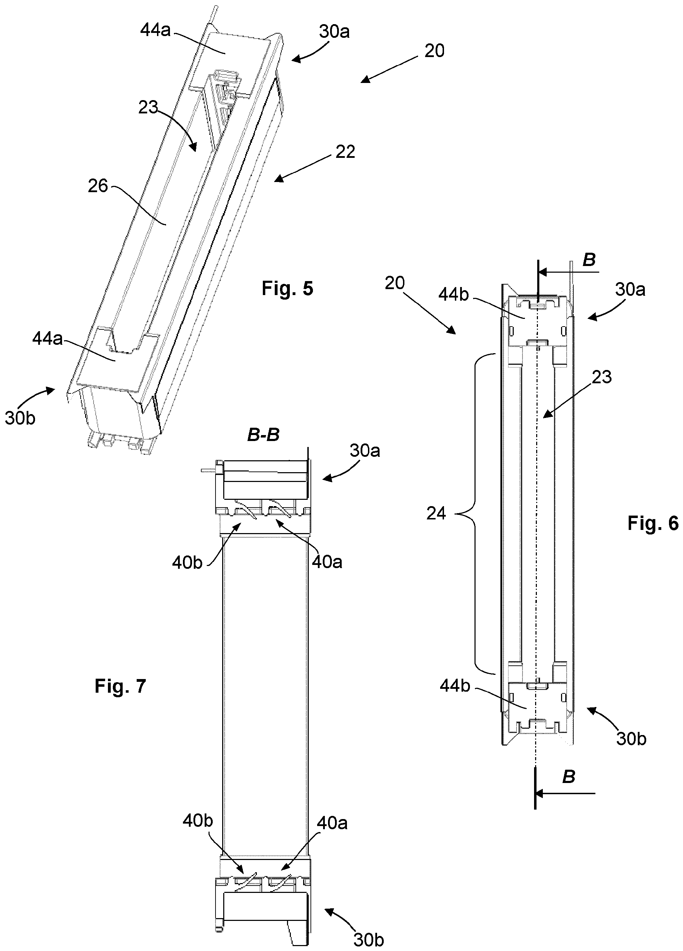

Figure 5 shows a preformed coil assembly 20 comprising a first and a second elastic-locking winding carrier 30a, 30b. The preformed coil assembly 20 is formed by a winding process (not shown) which consists in placing the first and second elastic-locking winding carriers 30a, 30b on both ends of a rectangular metallic support and insulating paper 26 on both side walls of the metallic support. The wire turns are then wound in layers by a winding machine onto the first and second winding carriers 30a, 30b and insulating paper.

The wire turns may be wound for example by placing the next layer shifted by half the wire diameter to lay the wires in a hexagonal mesh. Upper lateral edges of both winding carriers comprise closely adjacent grooves 34 for guiding the winding direction of the electrical conductor forming the winding during the winding process. The wire turns may however be wound around two winding carriers, wherein one winding carrier is a regular winding carrier and the other winding carrier is the elastic-locking winding carrier as described above.

Then, the entire coil is heated up to polymerize the glue with which the wires are coated in order to obtain the preformed coil assembly 20 of Figure 5, wherein insulating paper 26 covers the lateral sides of the elongated opening 23. The preformed coil assembly 20 therefore comprises a preformed coil 22 comprising winding sections 24 on both sides of the elongated opening 23 (Figure 6).

Preformed coil assemblies 20 are then pushed radially on corresponding teeth 14 of the stator 10 as shown in Figure 8. One of the first and second flexible members 40a, 40b of the first and second elastic-locking winding carrier 30a, 30b of Figure 7 elastically cooperates with respective upper and lower side of the tooth. If the gap is large, the distal end 42b of the flexible member 40b of respective winding carrier 30a, 30b is able to produce enough force to guarantee self-alignment of the preformed coil assembly with the corresponding tooth. However, if the gap is small, the flexible member 40b is configured to break loose when the preformed coil assembly 20 is mounted on said tooth 14 while the distal end 42a of the other flexible member 42a is able to produce enough force to guarantee self-alignment of the preformed coil assembly with the corresponding tooth.

After self-alignment of all preformed coil assemblies 20 with the corresponding teeth 14 of the stator 10 and once all the electric connexions are done, a potting operation is performed, which consists in placing the stator in a potting mould into which a synthetic resin is injected that hardens, permanently protecting the assembly in particular against shock, vibration, water infiltration and moisture. The above described elastic-locking winding carrier therefore ensures that the preformed coil assemblies are well aligned with respect to the stator before being permanently fixed in their respective position by the potting operation.

### Reference list

Electric rotary motor
Stator 10
   Tooth 14
Preformed coil assembly 20
   Preformed coil 22
      Elongated opening 23
      Winding section 24
      Insulating layer 26
   Elastic locking winding carrier 30
      Winding portion 32
      Opposite sides 32a, 32b
      Upper portion 33a
         Adjacent grooves 34
      Lower portion 33b
         Tooth receiving portion 35
         Rectangular-shaped cavity
         Lateral walls 36a, 36b
      First and second openings 38a, 38b
      Bridge 39
      First and second flexible members 40a, 40b
         Distal ends 42a, 42b
      First and second sidepieces 44a, 44b
         Cut-out portions 45

## Claims

1. An elastic-locking winding carrier (30) for a preformed coil assembly of a stator (10) of an electric motor, wherein the elastic-locking carrier (30) comprises a tooth receiving portion (35) being a cavity, and further comprises a winding portion (32) adapted to receive a winding, wherein said winding comprises a wound electrical conductor to produce a coil, the winding portion (32) comprising an upper portion (33a) which is a surface configured to cover one side of a tooth (14) and a lower portion (33b) which is a surface configured to face said tooth and opposing the upper portion (33a), wherein said winding carrier (30) further comprises a first and a second opening (38a, 38b) arranged on the winding portion (32), and a first and a second flexible member (40a, 40b) located inside respective first and second openings (38a, 38b), wherein a distal end (42a, 42b) of both the first and second flexible members (20a, 20b) extends below the lower portion (33b) of the winding portion (32) into the tooth receiving portion (35) and towards the tooth when the preformed coil assembly is mounted on said tooth, the distal end (42a, 42b) of one of the first and second flexible members (40a, 40b) extending further below the distal end of the other of the first and second flexible members (40a, 40b) such that either of said first and second flexible members (40a, 40b) is configured to cooperate with a tooth (14) of the stator (10) as a function of the magnitude of the gap between the tooth (14) and the lower portion (33b) of the winding portion (32) when the preformed coil assembly is mounted on said tooth in order to align said preformed coil assembly with respect to said tooth.

2. The elastic-locking winding carrier (30) according to claim 1, wherein one of said first and second flexible members (40a, 40b) is configured to break loose when the preformed coil assembly is mounted on said tooth (14).

3. The elastic-locking winding carrier (30) according to any preceding claim, wherein said first and a second flexible member (40a, 40b) are each connected to a lateral side of respective first and second openings (38a, 38b) and extends thereacross.

4. The elastic-locking winding carrier (30) according to any preceding claim, wherein the tooth receiving portion (35) is a right rectangular prism-shaped portion configured to be adjusted against an upper or lower portion of a tooth (14) of the stator.

5. The elastic-locking winding carrier (30) according to any preceding claim, wherein the first and second flexible members (40a, 40b) are aligned within a plane equidistant from two opposite sides (32a, 32b) of the winding portion (32).

6. The elastic-locking winding carrier (30) according to any preceding claim, wherein said first and second openings (38a, 38b) are through-openings extending from the upper portion (33a) to the lower portion (33b) of the winding portion (32).

7. The elastic-locking winding carrier (30) according to the preceding claim, wherein the first and a second opening (38a, 38b) are spaced apart from each other to form a bridge (39) therebetween to ensure structural rigidity to the winding carrier.

8. The elastic-locking winding carrier (30) according to any preceding claim, wherein said first and second openings (38a, 38b) have a constant square or rectangular cross-section along an axis perpendicular to a plane coinciding with the upper portion (33a) of the winding portion (32).

9. Preformed coil assembly (20) comprising a preformed coil (22) having an elongated opening (23) and two winding carriers (30a, 30b) arranged on respective end of the elongated opening (23) of the preformed coil (22), wherein at least one of said two winding carriers (30a, 30b) is an elastic-locking winding carrier (30a, 30b) according to any preceding claim.

10. Preformed coil assembly (20) according to the preceding claim, wherein each of said two winding carriers (30a, 30b) is an elastic-locking winding carrier (30a, 30b) according to any one of claims 1 to 8.

11. A stator (10) for a rotatory electric motor, comprising radial teeth (14) and a preformed coil assembly according to claim 9 or 10 mounted on each tooth (14) of the stator (10), wherein said first and second flexible members (40a, 40b) of the first and second elastic-locking winding carriers (30a, 30b) lockingly cooperates with respective upper and lower side of a tooth (14) of the stator (10).

12. A rotary electric motor comprising the stator according to claim 11.

## Patentansprüche

1. Ein elastisch verriegelnder Wicklungsträger (30) für eine vorgeformte Spulenanordnung eines Stators (10) eines Elektromotors, worin der elastisch verriegelnder Wicklungsträger (30) einen Zahnaufnahmeabschnitt (35) umfasst, der ein Hohlraum ist, und zudem einen Wicklungsabschnitt (32) umfasst, der zum Empfangen einer Wicklung angepasst ist, worin die besagte Wicklung einen gewickelten elektrischen Leiter aufweist, um eine Spule zu erzeugen, wobei der Wicklungsabschnitt (32) einen oberen Abschnitt (33a) aufweist, welcher eine zum Abdecken einer Seite eines Zahnes (14) ausgebildete Fläche ist, und einen unteren Abschnitt (33b), welcher als Fläche derart ausgebildet ist, um dem besagten Zahn gegenüberzustehen und dem oberen Abschnitt (33a) entgegengesetzt zu sein, worin der besagte Wicklungsträger (30) zudem eine erste und eine zweite Öffnung (38a, 38b) aufweist, welche auf dem Wicklungsabschnitt (32) angeordnet sind, und ein erstes und ein zweites flexibles Glied (40a, 40b), welche innerhalb der jeweiligen ersten und zweiten Öffnungen (38a, 38b) angeordnet sind, worin ein distales Ende (42a, 42b) sowohl des ersten als auch des zweiten flexiblen Glieds (20a, 20b) unter den unteren Abschnitt (33b) des Wicklungsabschnitts (32) in den Zahnaufnahmeabschnitt (35) und in Richtung des Zahns hineinragt, wenn die vorgeformte Spulenanordnung auf dem besagten Zahn montiert ist, wobei das distale Ende (42a, 42b) eines der ersten und zweiten flexiblen Glieder (40a, 40b) weiter unter das distale Ende des anderen der ersten und zweiten flexiblen Glieder (40a, 40b) derart hinausragt, dass eines der besagten ersten und zweiten flexiblen Glieder (40a, 40b) dazu ausgebildet ist, um mit einem Zahn (14) des Stators (10) als Funktion der Grösse des Spalts zwischen dem Zahn (14) und dem unteren Abschnitt (33b) des Wicklungsabschnitts (32) zusammenzuwirken, wenn die vorgeformte Spulenanordnung auf dem besagten Zahn montiert ist, um die besagte vorgefertigte Spulenanordnung in Bezug auf den besagten Zahn auszurichten.

2. Elastisch verriegelnde Wicklungsträger (30) gemäss Anspruch 1, worin eines der ersten und zweiten flexiblen Glieder (40a, 40b) so ausgebildet ist, dass es sich löst, wenn die vorgeformte Spulenanordnung auf dem besagten Zahn (14) montiert wird.

3. Elastisch verriegelnde Wicklungsträger (30) gemäss irgendeinem der vorhergehenden Ansprüche, worin das besagte erste und ein zweites flexibles Glied (40a, 40b) jeweils mit einer lateralen Seite der jeweiligen ersten und zweiten Öffnung (38a, 38b) verbunden sind und sich darüber erstrecken.

4. Elastisch verriegelnde Wicklungsträger (30) gemäss irgendeinem der vorhergehenden Ansprüche, worin der Zahnaufnahmeabschnitt (35) ein gerader, rechteckiger, prismenförmiger Abschnitt ist, der dazu ausgebildet ist, um an einen oberen oder unteren Abschnitt eines Zahns (14) des Stators anpassbar zu sein.

5. Elastisch verriegelnde Wicklungsträger (30) gemäss irgendeinem der vorhergehenden Ansprüche, worin das erste und das zweite flexible Glied (40a, 40b) in einer Ebene ausgerichtet sind, welche von zwei gegenüberliegenden Seiten (32a, 32b) des Wicklungsabschnitts (32) gleich weit entfernt ist.

6. Elastisch verriegelnde Wicklungsträger (30) gemäss irgendeinem der vorhergehenden Ansprüche, worin die besagte erste und die zweite Öffnung (38a, 38b) Durchgangsöffnungen sind, welche sich vom oberen Abschnitt (33a) zum unteren Abschnitt (33b) des Wicklungsabschnitts (32) erstrecken.

7. Elastisch verriegelnde Wicklungsträger (30) gemäss dem vorhergehenden Anspruch, worin die erste und eine zweite Öffnung (38a, 38b) so voneinander beabstandet sind, dass zwischen ihnen eine Brücke (39) gebildet wird, um dem Wicklungsträger strukturelle Steifigkeit zu verleihen.

8. Elastisch verriegelnde Wicklungsträger (30) gemäss irgendeinem der vorhergehenden Ansprüche, worin die besagte erste und die zweite Öffnung (38a, 38b) einen konstanten quadratischen oder rechteckigen Querschnitt entlang einer Achse aufweisen, welche senkrecht zu einer Ebene steht, die mit dem oberen Abschnitt (33a) des Wicklungsabschnitts (32) zusammenfällt.

9. Vorgeformte Spulenanordnung (20), umfassend eine vorgeformte Spule (22) mit einer länglichen Öffnung (23) und zwei Wicklungsträgern (30a, 30b), welche an den jeweiligen Enden der länglichen Öffnung (23) der vorgeformten Spule (22) angeordnet sind, worin mindestens einer der besagten beiden Wicklungsträger (30a, 30b) ein elastisch verriegelnder Wicklungsträger (30a, 30b) gemäss irgendeinem der vorhergehenden Ansprüche ist.

10. Vorgeformte Spulenanordnung (20) gemäss dem vorhergehenden Anspruch, worin jeder der besagten beiden Wicklungsträger (30a, 30b) ein elastisch verriegelnde Wicklungsträger (30a, 30b) gemäss irgendeinem der Ansprüche 1 bis 8 ist.

11. Stator (10) für einen rotierenden Elektromotor, umfassend radiale Zähne (14) und eine vorgeformte Spulenanordnung gemäss Anspruch 9 oder 10, welche an jedem Zahn (14) des Stators (10) montiert ist, worin die besagten ersten und zweiten flexiblen Glieder (40a, 40b) der ersten und zweiten elastisch verriegelnden Wicklungsträger (30a, 30b) verriegelnd mit der jeweiligen Ober- und Unterseite eines Zahns (14) des Stators (10) zusammenwirken.

12. Ein rotierender Elektromotor, welcher den Stator gemäss Anspruch 11 umfasst.

## Revendications

1. Un support d'enroulement à verrouillage élastique (30) pour un assemblage de bobine préformé d'un stator (10) d'un moteur électrique, dans lequel le support d'enroulement à verrouillage élastique (30) comprend une partie de réception de dent (35) qui est une cavité, et comprend en outre une partie d'enroulement (32) adaptée pour recevoir un enroulement, dans lequel ledit enroulement comprend un conducteur électrique enroulé pour produire une bobine, la partie d'enroulement (32) comprenant une partie supérieure (33a) qui est une surface configurée pour couvrir un côté d'une dent (14) et une partie inférieure (33b) qui est une surface configurée pour faire face à ladite dent et opposée à la partie supérieure (33a), dans lequel ledit support d'enroulement (30) comprend en outre une première et une seconde ouverture (38a, 38b) disposées sur la partie d'enroulement (32), et un premier et un second élément flexible (40a, 40b) situés à l'intérieur des première et seconde ouvertures respectives (38a, 38b), dans lequel une extrémité distale (42a, 42b) des premier et second éléments flexibles (20a, 20b) s'étend sous la partie inférieure (33b) de la partie d'enroulement (32) dans la partie de réception de dent (35) et vers la dent lorsque l'assemblage de bobine préformé est monté sur ladite dent, l'extrémité distale (42a, 42b) de l'un des premier et second éléments flexibles (40a, 40b) s'étendant plus bas que l'extrémité distale de l'autre des premier et second éléments flexibles (40a, 40b) de telle sorte que l'un ou l'autre desdits premier et second éléments flexibles (40a, 40b) est configuré pour coopérer avec une dent (14) du stator (10) en fonction de l'ampleur de l'espace entre la dent (14) et la partie inférieure (33b) de la partie d'enroulement (32) lorsque l'assemblage de bobine préformé est monté sur ladite dent afin d'aligner ledit assemblage de bobine préformé par rapport à ladite dent.

2. Le support d'enroulement à verrouillage élastique (30) selon la revendication 1, dans lequel l'un des premier et second éléments flexibles (40a, 40b) est configuré pour se détacher lorsque l'assemblage de bobine préformé est monté sur ladite dent (14).

3. Le support d'enroulement à verrouillage élastique (30) selon l'une quelconque des revendications précédentes, dans lequel les premier et second éléments flexibles (40a, 40b) sont chacun reliés à un côté latéral des première et seconde ouvertures (38a, 38b) et s'étendent au travers de celles-ci.

4. Le support d'enroulement à verrouillage élastique (30) selon l'une quelconque des revendications précédentes, dans lequel la partie de réception de dent (35) est une partie en forme de prisme rectangulaire droit configurée pour être ajustée contre une partie supérieure ou inférieure d'une dent (14) du stator.

5. Le support d'enroulement à verrouillage élastique (30) selon l'une quelconque des revendications précédentes, dans lequel les premier et second éléments flexibles (40a, 40b) sont alignés à l'intérieur d'un plan équidistant de deux côtés opposés (32a, 32b) de la partie d'enroulement (32).

6. Le support d'enroulement à verrouillage élastique (30) selon l'une quelconque des revendications précédentes, dans lequel lesdites première et seconde ouvertures (38a, 38b) sont des ouvertures traversantes s'étendant de la partie supérieure (33a) à la partie inférieure (33b) de la partie d'enroulement (32).

7. Le support d'enroulement à verrouillage élastique (30) selon la revendication précédente, dans lequel les première et seconde ouvertures (38a, 38b) sont espacées l'une de l'autre pour former un pont (39) entre elles afin d'assurer la rigidité structurelle du support d'enroulement.

8. Le support d'enroulement à verrouillage élastique (30) selon l'une quelconque des revendications précédentes, dans lequel lesdites première et seconde ouvertures (38a, 38b) ont une section transversale carrée ou rectangulaire constante le long d'un axe perpendiculaire à un plan coïncidant avec la partie supérieure (33a) de la partie d'enroulement (32).

9. Assemblage de bobine préformé (20) comprenant une bobine préformée (22) ayant une ouverture allongée (23) et deux supports d'enroulement (30a, 30b) disposés sur les extrémités respectives de l'ouverture allongée (23) de la bobine préformée (22), dans lequel au moins un desdits deux supports d'enroulement (30a, 30b) est un support d'enroulement à verrouillage élastique (30a, 30b) selon l'une quelconque des revendications précédentes.

10. Assemblage de bobine préformé (20) selon la revendication précédente, dans lequel chacun desdits deux supports d'enroulement (30a, 30b) est un support d'enroulement à verrouillage élastique (30a, 30b) selon l'une quelconque des revendications 1 à 8.

11. Un Stator (10) pour un moteur électrique rotatif, comprenant des dents radiales (14) et un assemblage de bobine préformé selon la revendication 9 ou 10 monté sur chaque dent (14) du stator (10), dans lequel lesdits premier et second éléments flexibles (40a, 40b) des premier et second supports d'enroulement à verrouillage élastique (30a, 30b) coopèrent de manière verrouillée avec les côtés supérieur et inférieur respectifs d'une dent (14) du stator (10).

12. Un moteur électrique rotatif comprenant le stator selon la revendication 11.
